# DEMANDE DE BREVET EUROPEEN

(11) **EP 1 551 132 A1**
(43) Date de publication de la demande: **06.07.2005**
(21) Numéro de dépôt: 04300885.3
(22) Date de dépôt: 14.12.2004
(51) Int. Cl.: H04L 12/40, H04L 12/46, H04L 12/26

(54) **Dispositif pour la simulation d'informations véhicules**

(30) Priorité: 30.12.2003 FR 0315574
(71) Demandeur: Renault s.a.s., 92100 Boulogne Billancourt (FR)
(72) Inventeur: Becherel, Raynald, 76410 Saint Aubin les Elbeuf (FR); Fula, Elie, 75017 Paris (FR); Pain, Eric, 92130 Issy les Moulineaux (FR); Tissier, Bruno, 91150 Etampes (FR)

(57) **Abrégé**

L'invention concerne un dispositif de simulation d'informations de véhicules, caractérisé en ce qu'il comprend au moins deux contrôleurs CAN (2, 3) intégrés pour une connexion dudit dispositif en parallèle sur deux réseaux CAN distincts (4, 5), l'un à haut débit et l'autre à faible débit, sur lesquels des informations véhicules sous forme de trames CAN sont prévues pour circuler, lesdits deux contrôleurs CAN assurant en plus une fonction de conversion et de remodelage de trames CAN haut débit en trames CAN faible débit et inversement, permettant un transfert bidirectionnel d'informations véhicules entre ledit réseau CAN haut débit (5) et ledit réseau CAN faible débit (4).

## Description

La présente invention concerne un dispositif pour la simulation d'informations véhicules, pouvant servir à simuler, au niveau des bancs d'essais moteur, la présence d'une pluralité de calculateurs électroniques destinés à fournir des informations véhicules pour les applications multiplexées embarquées dans l'automobile utilisant des réseaux CAN (acronyme anglo-saxon pour « Controller Area Network »).

L'invention se propose ainsi de répondre à un besoin accru pour les applications de test moteur visant à vérifier le bon fonctionnement d'un moteur, de disposer d'informations véhicules venant non seulement du calculateur contrôle moteur, mais également d'autres calculateurs tels que le calculateur ABS pour l'information véhicule concernant la vitesse du véhicule, le calculateur boîte de vitesse automatique, le calculateur contrôle de trajectoire, etc... Or, ces différents calculateurs ne sont pas à disposition au niveau du banc d'essai moteur, d'où la nécessité de mettre en oeuvre des fonctionnalités permettant de simuler au niveau des bancs d'essai moteur la présence d'une pluralité de calculateurs électroniques embarqués.

De nombreux outils logiciels et matériels ont déjà été développés dans ce but pour l'industrie automobile, de même que pour certaines applications aéronautiques, permettant notamment la conception, la simulation, l'analyse et le test de systèmes électroniques embarqués utilisant des réseaux CAN, et d'autres réseaux. Parmi les outils les plus répandus à l'heure actuelle, on peut citer CANalyser et CANoe, développés et commercialisés par la société Vector, spécialisée essentiellement dans le développement de systèmes en réseaux pour l'automobile. Le lecteur pourra d'ailleurs se reporter au site Internet de cette société (www.vector- France.com) où les principes et fonctions de base de ces outils sont décrits.

Ces outils nécessitent l'ajout de cartes supplémentaires d'entrée/sortie pour respectivement, acquérir des informations véhicules en entrée sous forme analogique, logique ou fréquentielle afin de pouvoir transformer ces informations sous forme de trames CAN haut et bas débit et pour transformer des informations acquises sous forme de trames CAN haut et bas débit en sorties logiques, analogiques ou fréquentielles. L'ajout de telles cartes d'entrée/sortie impliquant nécessairement des coûts supplémentaires,

Egalement, les dispositifs de simulation d'informations véhicules qui sont basés sur ces outils imposant à l'utilisateur de maîtriser le langage de programmation appelé CAPL (« Can Access Programming Language ») pour effectuer leur configuration. Or, il s'agit d'un langage de programmation complexe, ce qui implique de recourir à des spécialistes disposant d'une bonne connaissance de ce langage pour pouvoir configurer l'architecture opérationnelle du système.

La présente invention a pour but de remédier à ces inconvénients en proposant un dispositif de simulation d'informations véhicules qui soit notamment capable de servir de passerelle entre un réseau CAN haut débit et un réseau CAN faible débit et vice versa, de sorte à être capable d'utiliser pour différentes familles de véhicule au niveau d'un banc d'essai moteur, une information véhicule fournie par un même et unique calculateur.

A cet effet, l'invention concerne un dispositif de simulation d'informations véhicules, caractérisé en ce qu'il comprend au moins deux contrôleurs CAN intégrés pour une connexion dudit dispositif en parallèle sur deux réseaux CAN distincts, l'un à haut débit et l'autre à faible débit, sur lesquels des informations véhicules sous forme de trames CAN sont prévues pour circuler, lesdits deux contrôleurs CAN assurant en plus une fonction de conversion et de remodelage de trames CAN haut débit en trames CAN faible débit et inversement, permettant un transfert bidirectionnel d'informations véhicules entre ledit réseau CAN haut débit et ledit réseau CAN faible débit.

Un autre objet de la présente invention est de prévoir un dispositif de simulation d'informations véhicules capable de convertir des signaux d'entrée analogiques, ou logiques ou fréquentiels en informations véhicules sous la forme de trames CAN haut ou faible débit ainsi que des informations véhicules contenues dans des trames CAN haut ou faible débit en signaux de sortie analogiques, ou logiques ou fréquentiels.

A cet effet, le dispositif selon la présente invention comprend au moins une première entrée et au moins une première sortie pour respectivement recevoir et fournir des signaux de données sous forme analogique, ledit dispositif comprenant des moyens de conversion des signaux d'entrée analogiques en trames CAN haut ou faible débit et des moyens de conversion de trames CAN haut ou faible débit en signaux de sortie analogiques.

Le dispositif de l'invention comprend encore de préférence au moins une deuxième entrée et au moins une deuxième sortie pour respectivement recevoir et fournir des signaux de données sous forme logique, ledit dispositif comprenant des moyens de conversion des signaux d'entrée logiques en trames CAN haut ou faible débit et des moyens de conversion de trames CAN haut ou faible débit en signaux de sortie logiques.

Le dispositif de l'invention comprend encore de préférence au moins une troisième entrée et au moins une troisième sortie pour respectivement recevoir et fournir des signaux de données sous forme fréquentielle, ledit dispositif comprenant des moyens de conversion des signaux d'entrée fréquentiels en trames CAN haut ou faible débit et des moyens de conversion de trames CAN haut ou faible débit en signaux de sortie fréquentiels.

Selon un mode de réalisation de l'invention, les moyens de conversion des signaux d'entrée analogiques en trames CAN haut ou faible débit comprennent des convertisseurs analogiques-numériques intégrés audit dispositif.

Selon un mode de réalisation de l'invention, les moyens de conversion des signaux d'entrée logiques en trames CAN haut ou faible débit comprennent des capteurs de type tout ou rien intégrés audit dispositif.

Selon un mode de réalisation de l'invention, les moyens de conversion des signaux d'entrée fréquentiels en trames CAN haut ou faible débit comprennent des capteurs de signaux fréquentiels intégrés audit dispositif.

Selon un mode de réalisation de l'invention, les moyens de conversion de trames CAN haut ou faible débit en signaux de sorties analogiques comprennent des convertisseurs numérique-analogique.

Un autre objet de l'invention est encore de prévoir un dispositif de simulation d'informations véhicules qui soit facile à configurer ou reconfigurer sans aucune connaissance d'un langage de programmation particulier à travers une interface homme-machine simple.

A cet effet, la configuration du dispositif selon la présente invention est effectuée en utilisant les standards de l'automobile ASAM-MCD1 et ASAM-MCD2.

D'autres caractéristiques et avantages de la présente invention apparaîtront plus clairement à la lecture de la description suivante, donnée à titre d'exemple illustratif et non limitatif et faite en référence aux figures annexées dans lesquelles :
- la figure 1 illustre l'architecture fonctionnelle du dispositif de simulation selon la présente invention ;
- la figure 2 illustre un schéma fonctionnel du principe de la fonction passerelle du dispositif de simulation selon la présente invention ;
- la figure 3 illustre un schéma fonctionnel du principe de la conversion des entrées analogiques ou logiques ou fréquentielles en trames CAN haut ou faible débit selon la présente invention, et
- la figure 4 illustre un schéma fonctionnel du principe de la conversion des trames CAN haut ou faible débit en sorties analogiques ou logiques ou fréquentielles selon la présente invention.

Le dispositif de simulation d'informations véhicules 1 selon l'invention a pour caractéristique essentielle de comporter notamment deux contrôleurs CAN intégrés 2 et 3, pouvant être configurés au choix à haut ou faible débit. Ces deux contrôleurs permettent ainsi au dispositif de se connecter en parallèle sur deux réseaux CAN distincts présentant des débits différents, typiquement un réseau CAN faible débit 4, par exemple de l'ordre de 250 Kbit/s, et un réseau CAN haut débit 5, par exemple de l'ordre de 500 Kbit/s.

Les données circulant sur un réseau de type CAN sont organisées en trames, chacune comprenant un identificateur et une pluralité de champs d'information disposés selon un ordre prédéterminé obéissant au protocole CAN. Le format d'une trame de données transmise sur le réseau CAN est bien connu de l'homme du métier et il n'est pas nécessaire de le décrire plus en détail dans le cadre de la présente description.

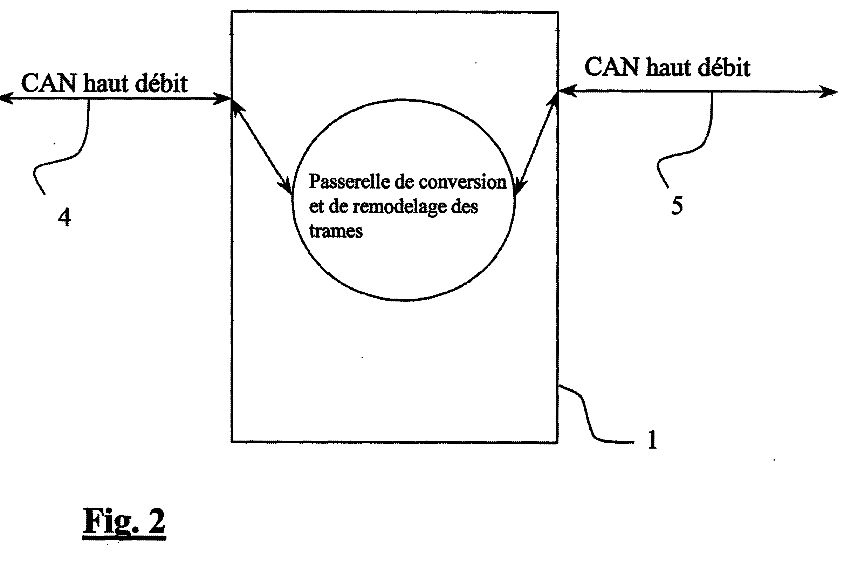

La fonction de chacun des contrôleurs CAN est donc tout d'abord d'assurer la gestion de l'activité des différentes trames circulant sur le bus CAN qui lui est associé. Egalement, selon une caractéristique importante de l'invention et comme illustré à la figure 2, les deux contrôleurs CAN sont paramétrés de façon à assurer une fonction de passerelle entre les deux réseaux CAN 4 et 5, permettant notamment de convertir et de remodeler des trames CAN haut débit en trames CAN faible débit et inversement. L'association des deux contrôleurs CAN intégrés au dispositif permet donc, selon l'invention, d'effectuer un transfert bidirectionnel de données d'informations véhicules entre le réseau CAN haut débit et le réseau CAN faible débit. Lorsque le dispositif de l'invention est paramétré en passerelle entre les deux réseaux CAN, la liste des trames à transférer d'un réseau CAN vers l'autre avec la modification des identificateurs est paramétrable par l'utilisateur, de même que les données dans chacune des trames CAN de manière à pouvoir recomposer les trames pendant la mise en oeuvre de la fonction passerelle.

La fonction passerelle assurée par le dispositif selon l'invention présente un avantage certain. En effet, pour certaines applications, il peut s'avérer nécessaire de récupérer une information véhicule du réseau faible débit pour l'utiliser sur le réseau haut débit, et vice versa. Par exemple, on peut souhaiter récupérer de l'information issue d'un calculateur électronique associé à un premier type de véhicule pour l'envoyer vers un calculateur associé à un second type de véhicule, sachant que les deux environnements, respectivement pour le premier et le second type de véhicule, ont des débits différents. Le dispositif selon l'invention sert alors de passerelle pour assurer le passage des informations véhicules du réseau CAN haut débit par exemple vers le réseau CAN faible débit, et vice versa.

Un exemple concret d'utilisation de cette fonction passerelle au niveau d'un banc d'essai moteur est la possibilité de convertir l'information véhicule de verrou logiciel fourni par le calculateur UCH (<< Unité Centrale Habitacle >>) du véhicule commercialisé par la demanderesse sous le nom de marque Mégane par exemple, en verrou logiciel du véhicule commercialisé par la demanderesse sous le nom de marque Laguna ou encore du véhicule commercialisé par la demanderesse sous le nom de marque Vel Satis. La fonctionnalité passerelle assurée par le dispositif de l'invention permet ainsi de réduire le nombre de calculateurs UCH aux bancs d'essai. Grâce à l'invention, il est dorénavant possible d'avoir un seul calculateur UCH pour plusieurs familles de véhicules, ce qui permet de réaliser des économies importantes lors des phases de test au niveau des bancs d'essai.

Le dispositif de simulation d'informations véhicules comprend également, en plus de ports d'alimentation non représentés, au moins une première entrée 6 destinée à recevoir des signaux de données sous forme analogique, au moins une deuxième entrée 8 destinée à recevoir des signaux de données sous forme logique et au moins une troisième entrée 10 destinée à recevoir des signaux de données sous forme fréquentielle.

Le dispositif selon l'invention comprend encore au moins une première sortie 12 destinée à fournir des signaux de données sous forme analogique, au moins une deuxième sortie 14 destinée à fournir des signaux de données sous forme logique et au moins une troisième sortie 16 destinée à fournir des signaux de données sous forme fréquentielle.

Selon un exemple de réalisation, le dispositif comprend huit entrées analogiques 6, huit entrées logiques de type tout ou rien (TOR) 8 et quatre entrées fréquentielles 10, ainsi que huit sorties analogiques 12, huit sorties logiques de type TOR et quatre sorties fréquentielles de type PWM (pour «Pulse-Width Modulation ») .

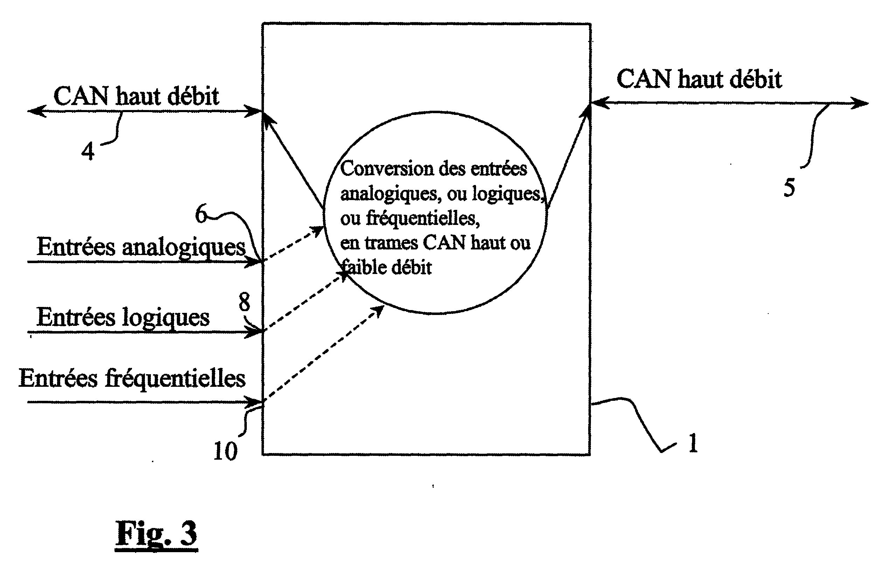

Selon un aspect important de l'invention, et comme illustré de façon fonctionnelle à la figure 3, les entrées analogiques 6, logiques 8 ou fréquentielles 10 peuvent être facilement paramétrées par l'utilisateur pour convertir les signaux de données d'entrée sous forme analogique, logique ou fréquentielle en trames de données CAN haut débit ou faible débit.

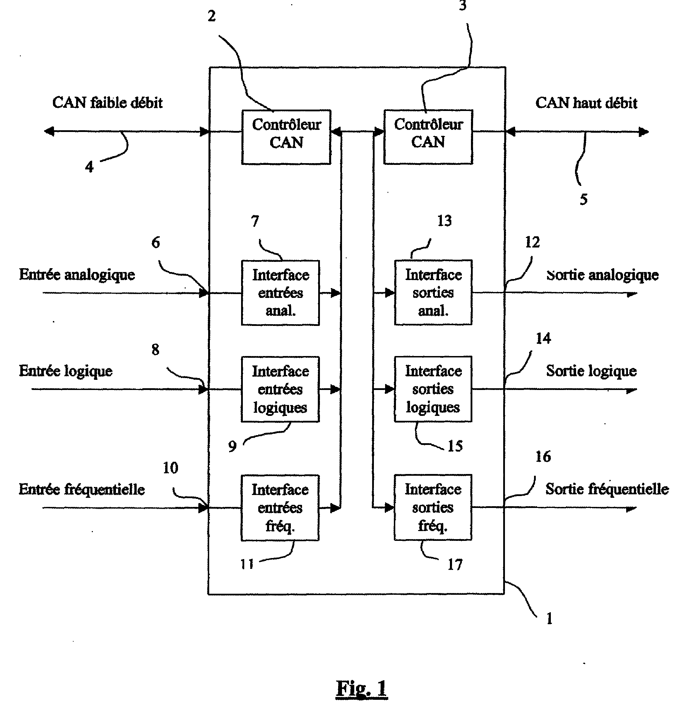

Pour ce faire, en revenant à la figure 1, le dispositif de l'invention comprend un module d'interface 7 avec les entrées analogiques faisant office de moyens de conversion des signaux d'entrée analogiques en trames CAN haut ou faible débit. Selon un mode de réalisation, les moyens de conversion des signaux d'entrée analogiques en trames CAN haut ou faible débit comprennent des convertisseurs analogique-numérique intégrés dans le dispositif de l'invention. Les signaux ainsi numérisés sont ensuite transformés en données sous forme de trames CAN haut ou faible débit, au choix.

Le dispositif de l'invention comprend également un module d'interface 9 avec les entrées logiques faisant office de moyens de conversion des signaux d'entrée logiques en trames CAN haut ou faible débit. Selon un mode de réalisation, les moyens de conversion des signaux d'entrée logiques en trames CAN haut ou faible débit comprennent des capteurs tout ou rien intégrés dans le dispositif de l'invention. Les signaux ainsi numérisés sont ensuite transformés en données sous forme de trames CAN haut ou faible débit, au choix.

Le dispositif de l'invention comprend également un module d'interface 11 avec les entrées fréquentielles faisant office de moyens de conversion des signaux d'entrée fréquentiels en trames CAN haut ou faible débit . Selon un mode de réalisation, les moyens de conversion des signaux d'entrée fréquentiels en trames CAN haut ou faible débit comprennent des capteurs de signaux fréquentiels intégrés dans le dispositif de l'invention, Les signaux ainsi numérisés sont ensuite transformés en données sous forme de trames CAN haut ou faible débit, au choix.

Ainsi, grâce à la possibilité offerte par le dispositif selon la présente invention de convertir en trames CA N les entrées analogiques, ou logiques, ou fréquentielles, le dispositif permet de simuler aux bancs la présence d'autres calculateurs pouvant fournir des informations véhicules afin de permettre la réalisation des essais moteur destinés aux véhicules équipés du réseau CAN. Grâce à l'invention, il est ainsi possible de simuler la présence du calculateur ABS, BVA, ESP,...

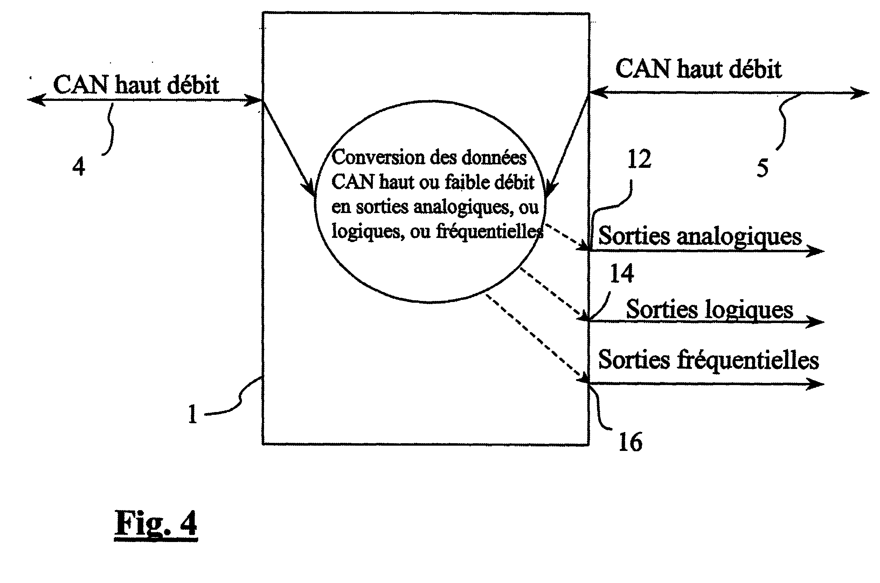

Selon un autre aspect important de l'invention, et comme illustré de façon fonctionnelle à la figure 4, les sorties analogiques 12, logiques 14 ou fréquentielles 16 peuvent être facilement paramétrées par l'utilisateur pour convertir des trames de données CAN haut ou faible débit en signaux de sortie analogiques, logiques ou fréquentiels.

Pour ce faire, le dispositif de l'invention comprend un module d'interface 13 avec les sorties analogiques, faisant office de moyens de conversion de trames CAN haut ou faible débit en signaux de sortie analogiques. Selon un mode de réalisation, les moyens de conversion comprennent des convertisseurs numérique-analogique intégrés au dispositif, permettant de générer les signaux analogiques en sortie.

Le dispositif de l'invention comprend également un module d'interface 15 avec les sorties logiques, faisant office de moyens de conversion de trames CAN haut ou faible débit en signaux de sortie logiques et un module d'interface 17 avec les sorties fréquentielles, faisant office de moyens de conversion de trames CAN haut ou faible débit en signaux de sortie fréquentiels de type PWM.

Ainsi, avec la possibilité offerte de convertir les informations véhicules circulant sous forme de trames sur le réseau CAN en sorties analogiques, logiques ou fréquentielles, le dispositif selon l'invention permet de simuler aux bancs la présence de calculateurs pouvant fournir des informations véhicules servant à l'activation de certains actionneurs.

Enfin, selon un autre aspect important de la présente invention, la configuration du dispositif selon l'invention ne nécessite aucune connaissance d'un langage de programmation spécialisé du type CAPL. Plus précisément, la configuration du dispositif est faite en utilisant le protocole ASAP1 (ou le standard de l'automobile ASAM-MCD1) et également en utilisant le fichier ASAP2 (ou le standard de l'automobile ASAM-MCD2) contenant la définition des paramètres qui servent à configurer le fonctionnement du dispositif. Le format interne des données manipulées par le dispositif de l'invention est donc compatible au standard ASAM-MCD2. Cette façon de configurer le dispositif selon l'invention permettra à l'utilisateur de définir notamment les trames pour la fonction passerelle en reconfigurant les identificateurs de trame et en recomposant les données sans modifier le format. Dans la phase de configuration, l'utilisateur pourra également définir les trames CAN dont les données doivent être converties pour être appliquées sur les sorties analogiques, logiques ou fréquentielles, ainsi que les entrées analogiques, logiques ou fréquentielles dont les signaux doivent être numérisés puis convertis en données sous forme de trame CAN,

La configuration du dispositif telle qu'elle vient d'être décrite peut se faire en utilisant les outils du commerce qui manipulent ASAP1 et ASAP2. C'est le cas du logiciel CANape et du logiciel INCA PC, qui offrent de plus des interfaces homme-machine simples et conviviales. Le dispositif comprend avantageusement une mémoire non volatile, non représentée, pour enregistrer les paramètres qui servent à configurer son fonctionnement. Ainsi, le dispositif est prévu pour conserver sa programmation quand il n'est plus électriquement alimenté.

Le dispositif de simulation d'informations véhicules selon la présente invention permet donc à la fois d'assurer le rôle de passerelle entre un réseau CAN haut débit et un réseau CAN faible débit et vice versa, de convertir des entrées analogiques, logiques ou fréquentielles en informations véhicules sous forme de trames CAN haut ou faible débit et de convertir des informations véhicules contenues dans des trames CAN haut ou faible débit, en sorties sous forme de signaux analogiques, logiques ou fréquentielles du type PWM.

Le dispositif selon l'invention est de plus facile à configurer à travers une interface homme-machine simple du type CANape ou INCA, sans aucune connaissance d'un langage de programmation.

## Revendications

1. Dispositif de simulation d'informations de véhicules, **caractérisé en ce qu'**il comprend au moins deux contrôleurs CAN (2, 3) intégrés pour une connexion dudit dispositif en parallèle sur deux réseaux CAN distincts (4, 5), l'un à haut débit et l'autre à faible débit sur lesquels des informations véhicules sous forme de trames CAN sont prévues pour circuler, lesdits deux contrôleurs CAN assurant en plus une fonction de conversion et de remodelage de trames CAN haut débit en trames CAN faible débit et inversement, permettant un transfert bidirectionnel d'informations véhicules entre ledit réseau CAN haut débit (5) et ledit réseau CAN faible débit (4).

2. Dispositif selon la revendication 1, **caractérisé en ce qu'**il comprend au moins une première entrée (6) et au moins une première sortie (12) pour respectivement recevoir et fournir des signaux de données sous forme analogique, ledit dispositif comprenant des moyens de conversion (7) des signaux d'entrée analogiques en trames CAN haut ou faible débit et des moyens de conversion (13) de trames CAN haut ou faible débit en signaux de sortie analogiques.

3. Dispositif selon la revendication 1 ou 2, **caractérisé en ce qu'**il comprend au moins une deuxième entrée (8) et au moins une deuxième sortie (14) pour respectivement recevoir et fournir des signaux de données sous forme logique, ledit dispositif comprenant des moyens de conversion (9) des signaux d'entrée logiques en trames CAN haut ou faible débit et des moyens de conversion (15) de trames CAN haut ou faible débit en signaux de sortie logiques.

4. Dispositif selon l'une quelconque des revendications 1 à 3 **caractérisé en ce qu'**il comprend au moins une troisième entrée (10) et au moins une troisième sortie (16) pour respectivement recevoir et fournir des signaux de données sous forme fréquentielle, ledit dispositif comprenant des moyens de conversion (11) des signaux d'entrée fréquentiels en trames CAN haut ou faible débit et des moyens de conversion (17) de trames CAN haut ou faible débit en signaux de sortie fréquentiels.

5. Dispositif selon l'une quelconque des revendications 2 à 4, **caractérisé en ce que** les moyens de conversion (7) des signaux d'entrée analogiques en trames CAN haut ou faible débit comprennent des convertisseurs analogiques-numériques intégrés audit dispositif.

6. Dispositif selon l'une quelconque des revendications 3 à 5, **caractérisé en ce que** les moyens de conversion (9) des signaux d'entrée logiques en trames CAN haut ou faible débit comprennent des capteurs de type tout ou rien intégrés audit dispositif.

7. Dispositif selon l'une quelconque des revendications 4 à 6, **caractérisé en ce que** les moyens de conversion (11) des signaux d'entrée fréquentiels en trames CAN haut ou faible débit comprennent des capteurs de signaux fréquentiels intégrés audit dispositif.

8. Dispositif selon l'une quelconque des revendications précédentes, **caractérisé en ce que** les moyens de conversion (13) de trames CAN haut ou faible débit en signaux de sorties analogiques comprennent des convertisseurs numérique-analogique.

9. Dispositif selon l'une quelconque des revendications précédentes, **caractérisé en ce que** la configuration dudit dispositif est effectuée en utilisant les standards de l'automobile ASAM-MCD1 et ASAM-MCD2.
